# EUROPEAN PATENT SPECIFICATION

(11) **EP 1 246 352 B1**
(45) Date of publication and mention of the grant of the patent: **24.06.2009**
(21) Application number: 02003976.4
(22) Date of filing: 22.02.2002
(51) Int. Cl.: H02M 3/335

(54) **Inverter-type power supply apparatus**
Wechselrichterstromversorgungsgerät
Appareil d'alimentation de puissance de type onduleur

(30) Priority: 23.02.2001 IT GE010016
(43) Date of publication of application: 02.10.2002
(73) Proprietor: R.G.M. S.p.A., 16153 Genova (IT)
(72) Inventor: Armanino, Gianfranco, 16154 Genova (IT)
(74) Representative: Forattini, Amelia

(56) References cited:
- EP-A- 0 483 897
- WO-A-98/42065
- US-A- 4 754 385
- US-A- 5 180 964
- US-A- 5 781 419
- DEMERCIL S. OLIVEIRA ET AL.: "A lossless commutation PWM two level forward converter." IEEE, 10 September 2000 (2000-09-10), pages 582-588, XP0000968742
- "Dual voltage clamp circuit." IBM TECHNICAL DISCLOSURE BULLETIN, vol. 32, no. 2, July 1989 (1989-07), pages 172-173, XP0000033388 NEW YORK

## Description

The present invention relates to an inverter-type power supply apparatus operating at high frequencies, comprising two series-connected input stages, which are connected to a single isolating transformer, and an electronic driving and control circuit.

In particular, the invention relates to an apparatus for supplying power by static conversion of energy of the above described type, adapted to supply high-power users, with a regulated and/or stabilized output, by drawing energy from high-voltage DC supplies, typically but not exclusively up to 4000 V.

Power supply systems of this type are generally constituted by H-type bridges, which use multiple semiconductor switches connected in series in the individual bridge branches.

Alternatively, a circuit solution is used which employs multiple H-type bridges (in a configuration with four semiconductor switches, or with two semiconductor switches plus two switching capacitors) connected in series, each provided with its own isolating transformer, which is required in order to allow correct organization of the connections of the outputs so as to achieve performance at nominal power, and other accessories, such as filters and individual control systems.

In a further third alternative, converters are used in two cascade-connected stages, each constituted by two switches and two diodes, with a common point at the central point of the supply voltage.

The above described devices entail problems of various kinds.

In particular, in the first case the operation of the series-connected semiconductor switches is always delicate and difficult to achieve, owing to the scattering of the characteristic switching parameters of individual components. This fact entails evident optimization problems and additional activities for component selection.

All this makes it impossible, in case of failure of a component, to replace the component directly without taking specific measures aimed at preserving the correct, safe and reliable functionality of the machine. Accordingly, maintenance is much more complicated and is possible only by replacing simultaneously all the semiconductor components that operate synchronously with a corresponding number of selected components. These requirements often cause malfunctions, since during maintenance the adequate professional expertise is rarely available.

In the second case, the need to provide functionally autonomous modules, each including a complete H-type bridge and its controls, with the corresponding isolating transformer, makes the machine very complicated, bulky and heavy. Already in the case of a power supply provided at a relatively high voltage, for example 4000 V, it is necessary to connect in series multiple complete functional units connected in an H-type bridge configuration so that each unit is subjected to an input voltage which is compatible with the characteristics of the semiconductor switches that are used. It is also necessary to solve, by means of appropriate HW and SW provisions, the problem of correct balancing of the voltages in input to the various H-type bridges.

In the case of the third cited alternative, there are significant constraints in the criteria for sizing the transformer and the snubbers: in particular, it is necessary to minimize leakage reactance between the two primary windings (for example by means of a two-wire winding, generally suitable only for low input voltages; whereas in the typical applications of this converter the supply voltages - and therefore the isolation voltages between the primary windings - are on the order of a few thousand volts) in order to avoid the circulation of long-duration current waves in the recirculation diodes as a consequence of the discharge of the energy stored in the inductor. This phenomenon, which is even more critical where capacitive snubbers are provided, can lead to the destruction of the diodes.

EP 483897 discloses a method and a circuit arrangement for outbalancing input and/or output voltage deviations in converters.

These basic problems and others, particularly those related to the number of semiconductor switches used for each module; are overcome and solved by a power supply apparatus comprising an inverter circuit with two series-connected stages, complete with control and monitoring device, characterized in that:
each stage comprises only two semiconductor switches and two recirculation diodes; the central point of each one of the two strings of two switches and two diodes being connected to the central point of the second string of two switches and two diodes by means of a coupling capacitor and the corresponding discharge resistor;
two main line capacitors, in series to each other, being connected to the string of switches and diodes, the two switches having a common point, which is in turn connected to the common point of the two capacitors;
a connection to a primary winding of the isolating transformer being derived from the common point between the semiconductor switch and the diode of one branch and the common point between the semiconductor switch and the recirculation diode of the second branch of the same stage; a connection to the second primary winding of the isolating transformer being derived from the similar common points between the semiconductor switches and the diodes of the second stage;
a connection between the semiconductor groups and the two primary windings of the transformer comprising a current transducer, which monitors the current in the two primary windings of the isolating transformer, and by the action of the control and monitoring system prevents the formation of a continuous component in the primary windings of the main transformer;
a single transformer being necessary and sufficient to adapt the output parameters and ensure full insulation between the input and the output of the apparatus; the leakage reactance between the two primary windings being as high as necessary, in order to allow the system to operate correctly and safely, even in the case of considerable input voltages;
the great leakage reactance between the two primary windings of the main transformer furthermore allows the use of snubbers of any kind, since they are decoupled by said reactance; accordingly, correct and fast inversion of the charge of the capacitor of the snubber being achieved without producing excessive current phenomena regarding the sizing of the components involved;
two secondary windings of the isolating transformer supplying a corresponding number of rectifier bridges, which supply, by means of an optional filter, energy to the users, typically inverters suitable to supply the final loads at industrial frequency;
four semiconductor switches being affected, in normal operating conditions, as regards the locking voltage, for half the input voltage of the apparatus, minus the usual safety factor; the current sizing of said semiconductor switches being obtained from the ratio between nominal machine power rating and half of the voltage in input to the system;
in normal operating conditions, at least two semiconductor switches being always in the off condition, when the other two are on; over 360° of the period, one or the other of the two stages that constitute the system being in locked condition;
when the machine is in inactive conditions, with the four semiconductor switches in locked condition, the overall impulse voltage of the two stages in series being twice the input voltage of the apparatus, plus the usual safety factor used in sizing the individual semiconductor switches; for example, the impulse voltage being equal to 13200 V, with a voltage in input to the system of 4000V.

The invention will be now described with reference to the accompanying drawings, given merely by way of non-limitative example, wherein:
Figure 1 is a circuit diagram of a power supply apparatus according to the invention;
Figure 2 plots the waveform of the voltage at the transformer;
Figure 3 shows a circuit diagram of a power supply apparatus according to a further aspect of the invention;
Figure 4 illustrates a variant of the machine architecture of Figure 1, in which a solid-state switch T5 and a diode D5 are inserted on the output circuit of the machine, downstream of Lu.
Figure 5 illustrates a variant of the machine architecture of Figure 3, in which a solid-state switch T5 and a diode D5 are inserted on the circuit of the main output of the machine, downstream of Lu.

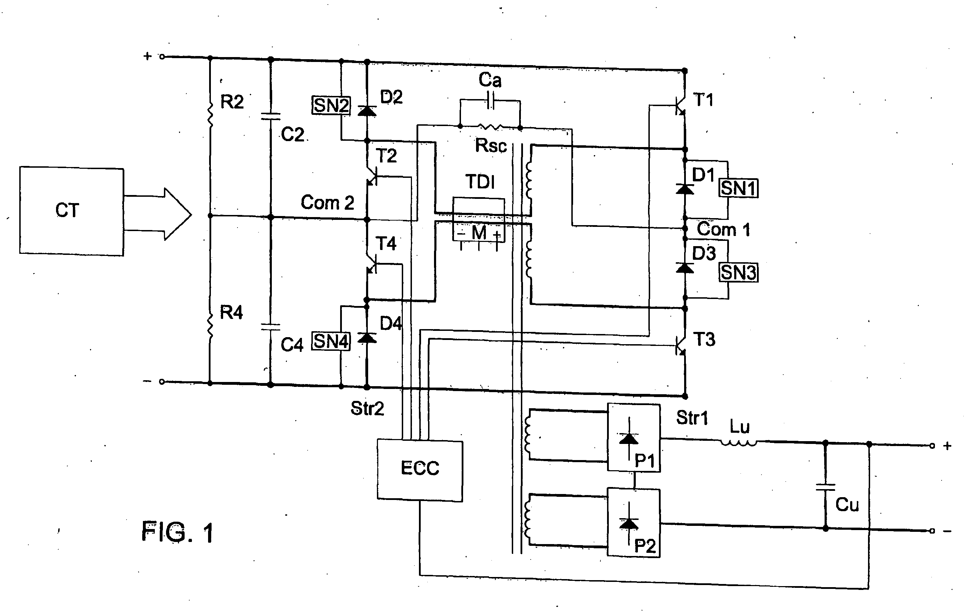

Figure 1 illustrates the basic architecture of the apparatus according to the invention.

The conductors of the input line, designated by LI, supply, by means of an upstream filter not shown in the figure, the positive and negative bars of the two-stage inverter.

Each stage comprises two semiconductor switches T1, T2 - T3, T4 and two recirculation diodes D1, D2 - D3, D4.

The two capacitors C2 and C4 are connected in parallel to the string Str 2 of two switches and two diodes, characterized in that the two switches T2 and T4 have, a common point; the capacitors are in turn connected in series and their central point is connected to the central point of the string of switches and diodes Com 2: therefore, more accurately, to the common point of the two switches.

The central point Com 1 of the string Str 1 of two switches and two diodes is connected to the central point of the string Str 2 of two switches and two diodes - and therefore also to the central point of the series of two capacitors cited above - across a coupling capacitor Ca, with a corresponding discharge resistor Rsc.

The corresponding snubbers Sn1÷Sn4 are connected in parallel to the four diodes D1÷D4.

One of the two primary windings of the isolating transformer is connected in the common points between each semiconductor switch and the corresponding recirculation diode, which individually belongs to each one of the two stages.

A winding of the current transducer TDI is connected in series to each primary winding, and monitors the current in the two primary windings of the transformer. The signal provided by the transducer is processed by the control logic of the inverter, which corrects the duration of the power-on sequences of the semiconductor switches, in order to ensure the best balancing of the conduction steps of the two stages that constitute the power supply apparatus and avoid the formation of a continuous component in the primary winding of the main transformer.

Two secondary windings supply two single-phase bridges (P1, P2), which supply power to the users by means of a filter Lu, Cu. The users can be classic static converters (suitable for DC to AC conversion or for DC to DC conversion), which in turn supply the loads, or can be directly constituted by the final loads.

An electronic driving and control system (ECC) manages the correct operation of the power supply apparatus.

The connections of the two stages that constitute the power supply apparatus can be carried to a terminal strip having no more than 9 terminals, which constitutes a voltage changer (CT). Accordingly, as an option, the machine can be preset to be series-connected or parallel-connected and to receive the full input voltage or half of it, by means of the connection of the terminals in three sets only. The nominal power can be delivered by the machine, in both cases, with an equal stress affecting the components of the converter.

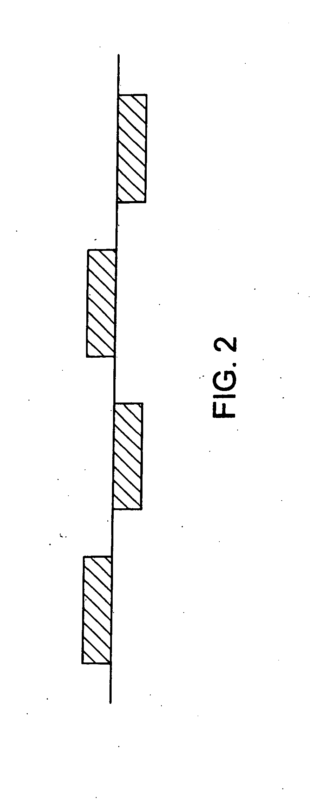

Figure 2 shows the output voltage at the transformer, which in the specific case is obtained with a particular adjustment technique known as phase shifting, which is adapted to control the delivered voltage and/or current according to the requirements of the users. As the switch-on angle of T2, T4 with respect to T1, T3 varies, the voltage applied to the main transformer varies and the output voltage is thus adjusted. Other adjustment methods can be used likewise.

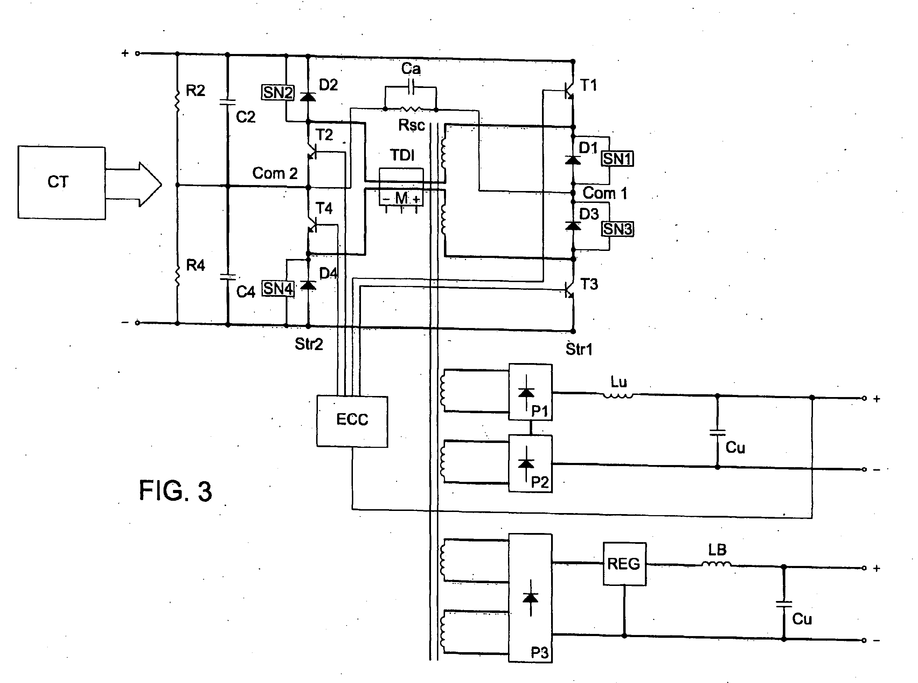

Figure 3 illustrates an apparatus according to a further aspect of the invention, and further comprising two tertiary low voltage windings, a corresponding rectifier bridge P3, a regulator REG, and an output filter Lb, Cb.

This architecture is provided by way of non-limitative example of the possible solutions that can be provided for output parameter adjustment. Other circuit solutions are possible in full compliance with the particular features related to the functionality of the basic layout to which the invention relates. The power supply apparatus shown in the embodiment of Figure 3 can be used, typically but not exclusively, for charging one or more batteries which are usually present in the more characteristic applications of power supply apparatus such as the one to which the present invention relates.

This second output of the power supply apparatus according to the invention is completed by a system for detecting the delivery parameters and by its own regulation system (REG), generally of the switching type, which are designed to correctly manage the voltage and current values supplied to the battery and to the corresponding users.

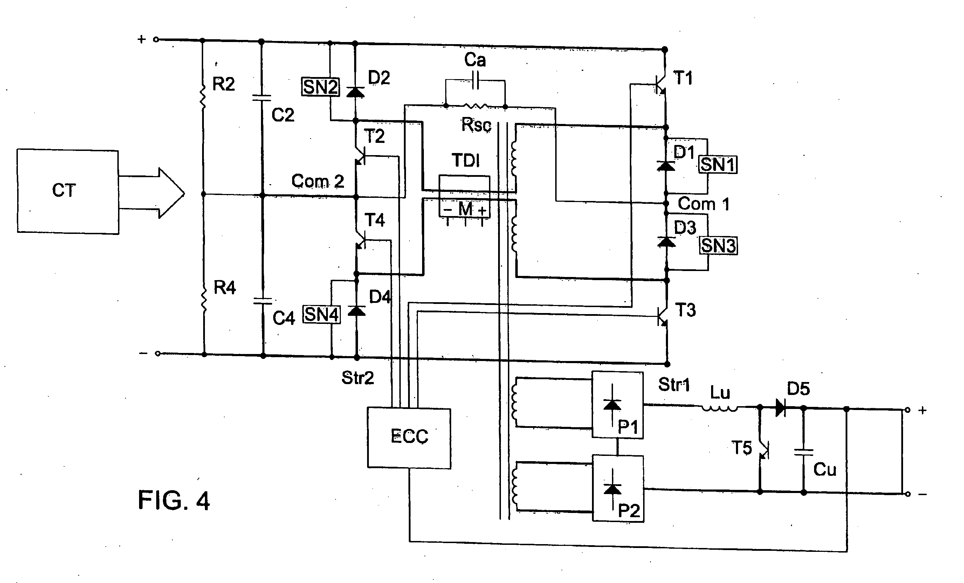

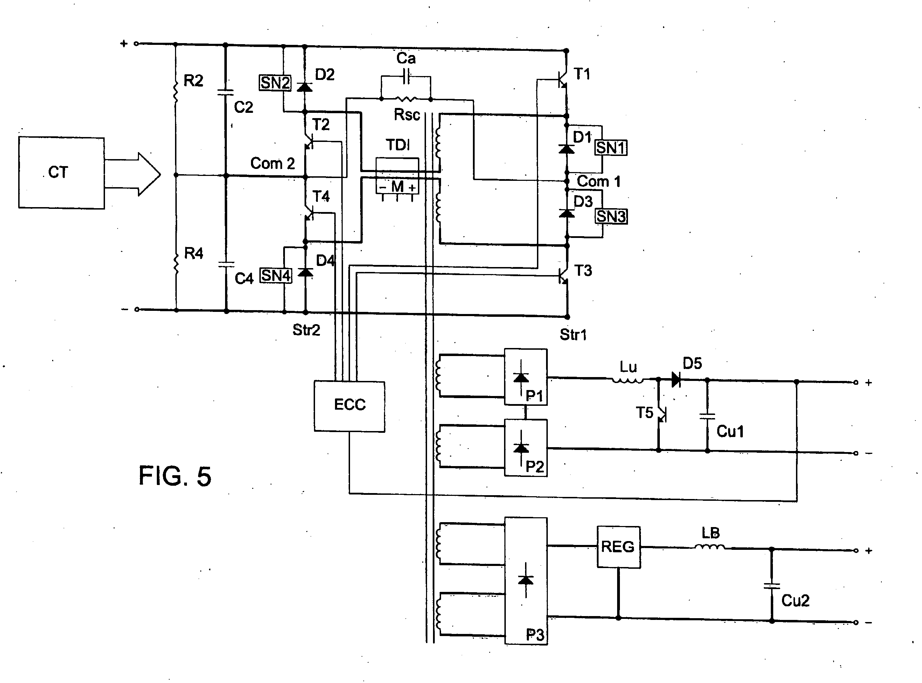

The two embodiments of the apparatus, shown in Figures 4 and 5 will be described only once and together, since their structure and operating principle are substantially similar.

According to this aspect of the invention, the apparatus further comprises a solid-state switch T5 / D5, acting as a step-up converter, which is driven, when active, by the control logic synchronously with the solid-state switches T1÷T4.

Whenever the variation range of the voltage in input to the converter is sufficiently wide, typically but not exclusively wider than a 1:2 ratio, this apparatus allows to optimize the sizing of the four solid-state switches of the converter with respect to switching losses. These losses constitute the largest fraction of all operating losses of these semiconductors in the classic applications of this type of machine.

The wider the variation range of the input voltage beyond the typical twofold value, the more it becomes important to contain the switching losses of solid-state switches.

Bearing in mind that switching losses are, minus second-order factors, proportional to the product of the maximum voltage to be switched and the maximum switching current involved, at the operating frequency of the machine, it is assumed, in accordance with the assumption of functionality on which this variant is based, that the output control covers, by virtue of the phase adjustment of the four solid-state switches, a preset portion of the variation range of the input voltage starting from its maximum value.

With such assumption, when the input voltage reaches a value equal to the preset value of the above mentioned adjustment range, the converter reaches the full-conduction condition, with half-waves of 180° each. At this point, if the input voltage drops again, adjustment of the step-up type, which can be obtained with appropriate criteria for controlling and monitoring the solid-state switch T5, is activated. This adjustment is active in the variation range of the input voltage from the preset value to the minimum allowed value of the voltage, while the main converter operates in a condition with 180° of conduction for each half-wave.

If, for example, the variation range of the input voltage varies in the range of 1 to 4, and if the output voltage is controlled with the assumption of:
a) covering half of the range with phase-adjustment operation of the four switches that constitute the converter,
b) covering the other half by means of the action of the step-up unit, while the converter operates with full conduction of 180° for each half-wave,
the switching losses of the solid-state switches of the converter are halved.

The above indications are given by way of example. Depending on convenience and without limitations or prejudice of any kind, it is possible to choose wider input voltage variation ranges and ratios other than 1:1 for the intervention of phase adjustment with respect to activation of the step-up regulator.

## Claims

1. A power supply apparatus comprising an inverter circuit with two series-connected stages (T1,T2,D1,D2; T3,T4,D3,D4), complete with control and monitoring device (ECC), each stage comprises only two semiconductor switches (T1,T2; T3,T4) and two recirculation diodes (D1,D2; D3,D4);
two main line capacitors (C2,C4) connected in series to each other and connected to two strings of switches and diodes (D2,T2,T4,D4; T1,D1,D3,T3), two switches (T2,T4) in one string having a common point (Com2) which is connected to the common point of the two capacitors (C2,C4);
a connection to a first primary winding of a single isolating transformer being derived from the common point between the semiconductor switch (T2) and the diode (D2) of a first branch and the common point between the semiconductor switch (T1) and the recirculation diode (D1) of a second branch of the first stage; a connection to a second primary winding of the isolating transformer being derived from the common point between the semiconductor switch (T4) and the diode (D4) of the first branch and the common point between the semiconductor switch (T3) and the recirculation diode (D3) of the second branch of the second stage;
the connection between the semiconductor groups and the two primary windings of the transformer comprising a current transducer (TDI) which monitors the current in the two primary windings of the isolating transformer, and by the action of a control and monitoring system prevents the formation of a continuous component in the primary windings of the isolating transformer;
the isolating transformer adapting the output parameters and ensuring full insulation between the input and the output of the apparatus;
two secondary windings of the isolating transformer supplying a corresponding number of rectifier bridges (P1,P2) which supply, by means of an optional filter (Lu,Cu), energy to the load,
the four semiconductor switches (T1,T2,T3,T4) being rated for normal operating conditions regarding the blocking voltage at half the input voltage of the apparatus minus an appropriate de-rating factor; the current rating of said semiconductor switches (T1,T2,T3,T4) being obtained from the ratio between nominal power supply apparatus power rating and half of the input voltage to the apparatus;
under normal operating conditions at least two semiconductor switches (T1,T2; T3,T4) always being in the off condition when the other two are on; over a full switching period alternatively one or the other of the two stages that constitute the apparatus being in locked condition;
when the machine is in inactive conditions with the four semiconductor switches in locked condition, the overall impulse withstanding voltage of the two stages in series being the sum of operational voltage ratings of each stage plus the de-rating factor used for the individual semiconductor switches,
**characterized in that**:
the central point (Com2) of the first string of two switches and two diodes (D2,T2,T4,D4) is connected to the central point (Com1) of the second string of two switches and two diodes (T1,D1,D3,T3) by means of a coupling capacitor (Ca) and a corresponding discharge resistor (Rsc) in parallel.

2. The power supply apparatus according to claim 1, wherein downstream of the DC output stage an adjustment module of the step-up type is added for limiting the extent of the intervention range of the phase adjustment system that acts on the solid-state switches of the converter.

3. The power supply apparatus according to claim 1, wherein the semiconductor switches are IGBTs (insulated gate bipolar transistors).

4. The power supply apparatus according to claim 1, wherein the semiconductor switches are GTOs (gate turn-off thyristors).

5. The power supply apparatus according to one or more of the preceding claims, wherein the transformer comprises a double tertiary winding with a rectified and regulated low-voltage output, used to charge one or more service batteries.

6. The power supply apparatus according to claim 5, further comprising additional pairs of secondary windings, suitable to supply differentiated users.

7. The power supply apparatus according to one or more of the preceding claims, wherein at least part of the terminals are carried to a voltage changer in order to allow the power supply apparatus to receive an input at full voltage, or half thereof, delivering in both cases the full nominal power to the users, with equal stresses affecting the components of the machine.

8. The power supply apparatus according to one or more of the preceding claims, only comprising two input stages and two low-voltage output rectifiers, suitable to supply a battery placed as a buffer to the users, or any other direct DC user, including motors, used for example for the propulsion of any machine, wherein the control and monitoring circuits directly switch on the semiconductor switches with appropriate sequences, in order to adjust the voltage / current / torque / rpm rate supplied to the users.

9. A power supply apparatus constituted by multiple apparatuses according to one or more of the preceding claims, which are series-connected in order to allow to supply power to the users when the input voltage is a whole or fractional multiple of the maximum allowable voltage for a single two-stage system comprising four semiconductor switches.

## Patentansprüche

1. Stromversorgungsvorrichtung, umfassend eine Wechselrichterschaltung mit zwei in Reihe geschalteten Stufen (T1, T2, D1, D2; T3, T4, D3, D4), komplett mit Steuer- und Überwachungseinrichtung (ECC), wobei jede Stufe nur zwei Halbleiterschalter (T1, T2; T3, T4) und zwei Rezirkulationsdioden (D1, D2; D3, D4) umfasst;
zwei Hauptleitungskondensatoren (C2, C4), die miteinander in Reihe geschaltet und mit zwei Ketten von Schaltern und Dioden (D2, T2, T4, D4; T1, D1, D3, T3) verbunden sind, wobei zwei Schalter (T2, T4) in einer Kette einen gemeinsamen Punkt (Com2) aufweisen, der mit dem gemeinsamen Punkt der beiden Kondensatoren (C2, C4) verbunden ist;
wobei eine Verbindung mit einer ersten Primärwicklung eines einzigen Isolationstransformators von dem gemeinsamen Punkt zwischen dem Halbleiterschalter (T2) und der Diode (D2) eines ersten Zweigs und dem gemeinsamen Punkt zwischen dem Halbleiterschalter (T1) und der Rezirkulationsdiode (D1) eines zweiten Zweigs der ersten Stufe abgeleitet wird; eine Verbindung mit einer zweiten Primärwicklung des Isolationstransformators aus dem gemeinsamen Punkt zwischen dem Halbleiterschalter (T4) und der Diode (D4) des ersten Zweigs und dem gemeinsamen Punkt zwischen dem Halbleiterschalter (T3) und der Rezirkulationsdiode (D3) des zweiten Zweigs der zweiten Stufe abgeleitet wird;
wobei die Verbindung zwischen den Halbleitergruppen und den beiden Primärwicklungen des Transformators einen Stromwandler (TDI) umfasst, der den Strom in den beiden Primärwicklungen des Isolationstransformators überwacht und durch Wirkung eines Steuer- und Überwachungssystems die Bildung einer kontinuierlichen Komponente in den Primärwicklungen des Isolationstransformators verhindert;
wobei der Isolationstransformator die Ausgangsparameter anpasst und volle Isolation zwischen dem Eingang und dem Ausgang der Vorrichtung sicherstellt;
zwei Sekundärwicklungen des Isolationstransformators eine entsprechende Anzahl von Gleichrichterbrücken (P1, P2) versorgen, die mittels eines optionalen Filters (Lu, Cu) der Last Energie zuführen,
wobei die vier Halbleiterschalter (T1, T2, T3, T4) Nennwerte für normale Betriebsbedingungen bezüglich der Sperrspannung bei der Hälfte der Eingangsspannung der Vorrichtung minus einem entsprechenden Abstufungsfaktor aufweisen; wobei der Stromnennwert der Halbleiterschalter (T1, T2, T3, T4) aus dem Verhältnis zwischen dem nominalen Stromversorgungsvorrichtungs-Leistungsnennwert und der Hälfte der Eingangsspannung der Vorrichtung erhalten wird;
wobei sich unter normalen Betriebsbedingungen mindestens zwei Halbleiterschalter (T1, T2; T3, T4) immer im ausgeschalteten Zustand befinden, wenn die beiden anderen eingeschaltet sind;
wobei sich über eine volle Schaltperiode alternativ eine oder die andere der beiden Stufen, die die Vorrichtung bilden, in einem verriegelten Zustand befindet;
wobei, wenn sich die Maschine in inaktiven Zuständen mit den vier Halbleiterschaltern im verriegelten Zustand befindet, die Gesamtstehstoßspannung der beiden Stufen in Reihe die Summe der Betriebsspannungsnennwerte jeder Stufe plus dem für die einzelnen Halbleiterschalter verwendeten Abstufungsfaktor ist;
**dadurch gekennzeichnet, dass**
der Mittelpunkt (Com2) der ersten Kette von zwei Schaltern und zwei Dioden (D2, T2, T4, D4) mittels eines Koppelkondensators (Ca) und eines entsprechenden Entladewiderstands (Rsc) in Parallelschaltung mit dem Mittelpunkt (Com1) der zweiten Kette von zwei Schaltern und zwei Dioden (T1, D1, D3, T3) verbunden ist.

2. Stromversorgungsvorrichtung nach Anspruch 1, wobei signalabwärts der Gleichstromausgangsstufe ein Einstellmodul des Aufwärtstyps hinzugefügt ist, um das Ausmaß des Interventionsbereichs des Phaseneinstellsystems, das an den Festkörperschaltern des Umrichters wirkt, zu begrenzen.

3. Stromversorgungsvorrichtung nach Anspruch 1, wobei die Halbleiterschalter IGBT's (Bipolartransistoren mit isoliertem Gate) sind.

4. Stromversorgungsvorrichtung nach Anspruch 1, wobei die Halbleiterschalter GTO's (Gate-Turn-Off-Thyristoren) sind.

5. Stromversorgungsvorrichtung nach einem oder mehreren der vorhergehenden Ansprüche, wobei der Transformator eine doppelte Tertiärwicklung mit einem gleichgerichteten und geregelten Niederspannungsausgang umfasst, der zum Laden einer oder mehrerer Service-Batterien verwendet wird.

6. Stromversorgungsvorrichtung nach Anspruch 5, ferner umfassend zusätzliche Paare von Sekundärwicklungen, die dafür geeignet sind, differenzierte Benutzer zu versorgen.

7. Stromversorgungsvorrichtung nach einem oder mehreren der vorhergehenden Ansprüche, wobei mindestens ein Teil der Anschlüsse zu einem Spannungswechsler geführt werden, um es der Stromversorgungsvorrichtung zu erlauben, eine Eingabe mit voller Spannung oder der Hälfte davon zu empfangen, wobei in beiden Fällen die volle Nennleistung an die Benutzer abgeliefert wird, wobei gleiche Belastungen auf die Komponenten der Maschine wirken.

8. Stromversorgungsvorrichtung nach einem oder mehreren der vorhergehenden Ansprüche, die nur zwei Eingangsstufen und zwei Niederspannungsausgangsgleichrichter umfasst, die geeignet ist, eine als Puffer angeordnete Batterie den Benutzern zuzuführen, oder jedem beliebigen anderen Gleichstrombenutzer, darunter Motoren, die zum Beispiel zum Antrieb einer beliebigen Maschine verwendet werden, wobei die Steuer- und Überwachungsschaltungen die Halbleiterschalter direkt mit geeigneten Sequenzen schalten, um Spannung/Strom/Drehmoment/Drehzahl, die den Benutzern zugeführt werden, einzustellen.

9. Stromversorgungsvorrichtung, die durch mehrere Vorrichtungen nach einem oder mehreren der vorhergehenden Ansprüche gebildet wird, die in Reihe geschaltet sind, um es zu erlauben, den Benutzern Strom zuzuführen, wenn die Eingangsspannung ein Ganzes oder Bruchvielfaches der maximal zulässigen Spannung für ein einziges zweistufiges System, das vier Halbleiterschalter umfasst, ist.

## Revendications

1. Appareil d'alimentation électrique comprenant un circuit inverseur avec deux étages connectés en série (T1, T2, D1, D2 ; T3, T4, D3, D4), doté d'un dispositif de commande et de surveillance (ECC), chaque étage ne comprend que deux commutateurs à semi-conducteur (T1, T2 ; T3, T4) et deux diodes de recirculation (D1, D2 ; D3, D4) ;
deux condensateurs de ligne principale (C2, C4) connectés entre eux en série et connectés à deux chaînes de commutateurs et de diodes (D2, T2, T4, D4 ; T1, D1, D3, T3), deux commutateurs (T2, T4) dans une chaîne ayant un point commun (Com2) qui est connecté au point commun des deux condensateurs (C2, C4) ;
une connexion à un premier enroulement primaire d'un transformateur d'isolement unique étant dérivée du point commun entre le commutateur à semi-conducteur (T2) et la diode (D2) d'une première branche et le point commun entre le commutateur à semi-conducteur (T1) et la diode de recirculation (D1) d'une seconde branche du premier étage ; une connexion à un second enroulement primaire du transformateur d'isolement dérivée à partir du point commun entre le commutateur à semi-conducteur (T4) et la diode (D4) de la première branche et le point commun entre le commutateur à semi-conducteur (T3) et la diode de recirculation (D3) de la seconde branche du second étage ;
la connexion entre les groupes de semi-conducteurs et les deux enroulements primaires du transformateur comprenant un capteur de courant (TDI) qui surveille le courant dans les deux enroulements primaires du transformateur d'isolement, et par l'action d'un système de commande et de surveillance, empêche la formation d'une composante continue dans les enroulements primaires du transformateur d'isolement ;
le transformateur d'isolement adaptant les paramètres de sortie et assurant une isolation totale entre l'entrée et la sortie de l'appareil ;
deux enroulements secondaires du transformateur d'isolement alimentant un nombre correspondant de ponts de redresseurs (P1, P2) qui fournissent, à l'aide d'un filtre facultatif (Lu, Cu), une énergie à la charge,
les quatre commutateurs à semi-conducteur (T1, T2, T3, T4) étant prévus pour des conditions de fonctionnement normal en ce qui concerne la tension de blocage à la moitié de la tension d'entrée de l'appareil moins un facteur de détarage approprié ; le courant nominal desdits commutateurs à semi-conducteur (T1, T2, T3, T4) étant obtenu à partir du rapport entre la puissance nominale de l'appareil d'alimentation électrique et la moitié de la tension d'entrée vers l'appareil ;
dans des conditions de fonctionnement normal, au, moins deux commutateurs à semi-conducteur (T1, T2 ; T3, T4) se trouvant toujours dans la condition hors service lorsque les deux autres sont en service ; sur une période de commutation complète, l'un ou l'autre des deux étages qui constituent l'appareil se trouvant tour à tour dans une condition verrouillée ;
lorsque la machine se trouve dans des conditions inactives, les quatre commutateurs à semi-conducteur étant dans une condition verrouillée, la tension de tenue globale aux chocs des deux étages en série, étant la somme des tensions nominales opérationnelles de chaque étage plus le facteur de détarage utilisé pour les commutateurs à semi-conducteur individuels,
**caractérisé en ce que** :
le point central (Com2) de la première chaîne de deux commutateurs et de deux diodes (D2, T2, T4, D4) est connecté au point central (Com1) de la seconde chaîne de deux commutateurs et de deux diodes (T1, D1, D3, T3) à l'aide d'un condensateur de couplage (Ca) et d'une résistance de décharge correspondante (Rsc) placée en parallèle.

2. Appareil d'alimentation électrique selon la revendication 1, dans lequel, en aval de l'étage de sortie en courant continu, un module de réglage du type élévateur est ajouté de manière à limiter l'étendue de la plage d'intervention du système de réglage de phase qui agit sur les commutateurs à semi-conducteur du convertisseur.

3. Appareil d'alimentation électrique selon la revendication 1, dans lequel les commutateurs à semi-conducteur sont des IGBT (transistors bipolaires à porte isolée).

4. Appareil d'alimentation électrique selon la revendication 1, dans lequel les commutateurs à semi-conducteur sont des GTO (thyristors à blocage par la gâchette).

5. Appareil d'alimentation électrique selon une ou plusieurs des revendications précédentes, dans lequel le transformateur comprend un double enroulement tertiaire avec une sortie basse tension redressée et régulée, utilisée de manière à charger une ou plusieurs batteries de service.

6. Appareil d'alimentation électrique selon la revendication 5, comprenant en outre des paires supplémentaires d'enroulements secondaires appropriés à l ' alimentation d'utilisateurs différenciés.

7. Appareil d'alimentation électrique selon une o plusieurs des revendications précédentes, dans lequel au moins une partie des bornes sont reliées à un changeur de tension afin de permettre à l'appareil d'alimentation électrique de recevoir une entrée à pleine tension, ou la moitié de celle-ci, en fournissant aux utilisateurs dans l'un ou l'autre cas, la pleine puissance nominale, des contraintes égales affectant les composants de la machine.

8. Appareil d'alimentation électrique selon une ou plusieurs des revendications précédentes, comprenant seulement deux étages d'entrée et deux redresseurs de sortie basse tension, approprié pour alimenter une batterie placée en tant que tampon vis-à-vis des utilisateurs, ou n'importe quel autre utilisateur direct en courant continu, y compris des moteurs, utilisé par exemple pour la propulsion de n'importe quelle machine, dans lequel les circuits de commande et de surveillance mettent directement en service les commutateurs à semi-conducteur avec des séquences appropriées, de manière à régler la tension / le courant / le couple / la vitesse en tr/mn, fournis aux utilisateurs.

9. Appareil d'alimentation électrique constitué par de multiples appareils selon une ou plusieurs des revendications précédentes, qui sont connectés en série de manière à permettre de fournir une énergie aux utilisateurs lorsque la tension d'entrée est à sa pleine valeur ou est un multiple partiel de la tension maximale permise pour un système unique à deux étages qui comprend quatre commutateurs à semi-conducteur.
